# EUROPEAN PATENT APPLICATION

(11) **EP 2 384 802 A1**
(43) Date of publication of application: **09.11.2011**
(21) Application number: 10380068.6
(22) Date of filing: 07.05.2010
(51) Int. Cl.: B01D 33/073

(54) **Liquid filtering device, applicable to a meat material injecting machine**

(71) Applicant: Metalquimia S.A., 17007 Girona Gerona (ES)
(72) Inventor: Lagares Corominas, Narcis, 17007 Girona (ES)
(74) Representative: Gislon, Gabriele

(57) **Abstract**

The invention relates to a liquid filtering device, applicable to a meat product injection machine, comprising a pre-filtering unit (30) with two pre-filtration drums (1, 8) arranged to rotate coaxially about a horizontal axis and a safety filtering unit (40) with at least one safety filter sleeve (7) submerged in a tank (5) and connected to an outlet (6). An inlet hopper (3) receives a liquid to be filtered and forces it into the first pre-filtration drum (1) through an upper region of its filtering wall (2). The liquid which exits a lower region of the first pre-filtration drum (1) is collected in a tub (4), then it enters into the second pre-filtration drum (8) through a lower region of its filtering wall (9), and next it is poured into tank (5) through an open side wall (8a) of the second pre-filtration drum (8).

## Description

### Technical Field

The present invention relates to a liquid filtering device, applicable to an injection machine used to inject a liquid, generally brine, in pieces of meat product. The filtering device is used to filter the liquid that is supplied to the injection machine as well as the surplus liquid from the injection process, which is again recycled towards the injection machine during the operation thereof.

The proposed filtering device can be used for other machines which require precise filtering of a liquid to be used in a later step.

### Background of the invention

Patent ES-A-2015398 discloses fluid substance recycling and filtering equipment applicable to a meat mass injection machine. The filtering and recycling equipment comprises a pre-filtering unit with a pre-filtration drum arranged to rotate about a horizontal rotation axis and provided with a filtering wall around said horizontal rotation axis, and a safety filtering unit with a safety filtering drum arranged to rotate coaxially together with the pre-filtration drum and provided with a corresponding filtering wall around the horizontal rotation axis.

The liquid from the injection machine is poured over an upper region of the pre-filtration drum such that it penetrates into same by gravity through its filtering wall, and exits the pre-filtration drum through an open side wall thereof. The pre-filtered liquid is collected in a tub. The safety filtering drum is arranged such that its filtering wall rotates partially submerged in the pre-filtered liquid contained in the tub.

The liquid of the tub enters into the safety filtering drum through open side walls thereof. The tub has an outlet located below and very close to a lower region of the filtering wall of the safety filtering drum, and the liquid is forced out of the safety filtering drum through its filtering wall and through the outlet by suction means. In the upper region of the safety filtering drum there is an automatic cleaning device which uses outside to inside pressurized water jets through the filtering wall.

Patent EP-A-1275305 describes a filtering apparatus applicable to a meat materials injection machine, comprising a pre-filtering unit with a pre-filtration drum arranged to rotate about a horizontal rotation axis and provided with a filtering wall around said horizontal rotation axis, and a safety filtering unit with a pair of safety filtering sleeves horizontally submerged in a tank. The liquid from the injection machine is poured over an upper region of the pre-filtration drum such that it penetrates into same by gravity through its filtering wall, and exits the pre-filtration drum through open side walls thereof and through a lower region of the filtering wall. The pre-filtered liquid is collected and poured into the mentioned tank inside which the safety filtering sleeves are located. The safety filtering sleeves are connected to an outlet and the liquid is forced into the safety filtering sleeves through their filtering wall and through the outlet by suction means.

The safety filtering sleeves can independently pivot towards a straight position emerging from the liquid for cleaning and maintenance tasks. A valve device allows operating alternately by means of one of the safety filtering sleeves while the other one is subjected to the cleaning and maintenance operations.

It has been observed that a single pre-filtration drum in the pre-filtering unit may not be enough to provide efficient pre-filtering of the liquid from the injection machine, which can still incorporate particles or small pieces of meat mixed therewith, and this results in a higher amount of particles retained by the filtering wall of the safety filter, with the risk of obstruction and the need to perform the cleaning and maintenance operations more frequently.

### Disclosure of the Invention

The present invention contributes to overcoming the aforementioned drawback by providing a liquid filtering device, applicable to a meat product injection machine, integrating a pre-filtering unit and one or more safety filtering units to assure that the particles in the liquid filtered by said units do not exceed a pre-determined size. According to the invention, the pre-filtering unit comprises at least first and second filtration drums arranged to rotate coaxially together about a horizontal rotation axis and provided with respective first and second filtering walls around said horizontal rotation axis, and an inlet hopper configured to receive a liquid to be filtered and to force it into said first pre-filtration drum through said first filtering wall in an upper region thereof. A tub is arranged below the first and second filtration drums to collect the liquid filtered through the first filtering wall, which exits a lower region of the first pre-filtration drum.

The liquid pre-filtered by the first pre-filtration drum passes from the mentioned collection tub into said second pre-filtration drum through the second cylindrical filtering wall in a lower region thereof and is poured from inside the second pre-filtration drum into a tank through an open side wall of the second pre-filtration drum. The safety filtering unit comprises at least one safety filter sleeve submerged in said tank. The safety filter sleeve is connected to an outlet of the tank and suction means are provided to suck the liquid contained in the tank through a filtering wall of the safety filter sleeve and said outlet.

The liquid is thus first passed through the first filtering wall from outside to inside the first pre-filtration drum, then it is passed through the second filtering wall from outside to inside the second pre-filtration drum, and finally it is passed through the filtering wall of the safety filter sleeve before being directed towards the outlet. The first and second filtering walls of the first and second pre-filtration drums can have the same mesh size, or the second filtering wall can have a smaller or larger mesh size than that of the first filtering wall. The filtering wall of the safety filter sleeve will have a mesh size that is smaller than or equal to that of the first and second filtering walls of the first and second pre-filtration drums.

The pre-filtered liquid can pass from inside the first pre-filtration drum to the tub through the lower region of the corresponding first filtering wall and furthermore through completely or partially open side walls arranged at opposite ends of the first pre-filtration drum. The second pre-filtration drum has a closed side wall at the end adjacent to the first pre-filtration drum and the mentioned open side wall at the end adjacent to the tank of the safety filtering unit. The end of the tub adjacent to the open side wall of the second pre-filtration drum is sealed by dynamic sealing means arranged between the tub and the second pre-filtration drum, such that the liquid can only enter second pre-filtration drum through the lower region of its cylindrical filtering wall submerged in the liquid of the tub.

The pre-filtered liquid exiting the second pre-filtration drum through its open side wall can optionally be passed through one or more additional filtering drums before being poured into the tank of the safety filtering unit. To that end, in one embodiment the pre-filtering unit comprises at least one third additional pre-filtration drum arranged to rotate coaxially together with the first and second filtration drums, and provided with an additional filtering wall around the horizontal rotation axis. The tub in turn comprises at least one additional compartment separated from the tub by the dynamic sealing means arranged between the tub and the second pre-filtration drum. This additional compartment of the tub thus receives the pre-filtered liquid poured from the open side wall of the second pre-filtration drum.

The additional pre-filtration drum has a closed side wall at an end adjacent to the second pre-filtration drum and an open side wall adjacent to the tank of the safety filtering unit. Additional dynamic sealing means are arranged between the additional compartment of the tub and an end of the additional pre-filtration drum adjacent to said open side wall thereof. The pre-filtered liquid is thus forced from the additional compartment of the tub into the additional pre-filtration drum through a lower region of the additional filtering wall and is poured from inside the additional pre-filtration drum into the tank of the safety filtering unit through the mentioned open side wall of the additional pre-filtration drum. Similarly, the pre-filtering unit can include several additional pre-filtration drums.

In one embodiment, the safety filtering unit comprises at least two of the mentioned safety filtering sleeves connected to said outlet through respective independent valve devices, according to technique that is known through the mentioned documents. Each of said valve devices has a mobile body connected to a support on which the corresponding safety filter sleeve is installed. The valve device is operated by a pivoting movement of said support between a working position, in which the safety filter sleeve is submerged in the liquid in the tank and the corresponding valve device is open and a cleaning and maintenance position, in which the safety filter sleeve is emerged from the liquid of the tank and the corresponding valve device is closed.

Thus, the filtering device can operate with one of the safety filtering sleeves the support of which is arranged in the working position while the support of another safety filtering sleeve can be in the cleaning and maintenance position, allowing the extraction of the corresponding safety filter sleeve for its cleaning, maintenance or replacement. To that end, each safety filter sleeve is fixed to its corresponding support by fixing means that can be easily released manually without needing tools, for example by means of a simple snap-fitting, allowing an extraction and placement of the safety filter sleeve by axially sliding it along the support.

Each of the supports of the safety filtering sleeves comprises a body which extends internally along the corresponding safety filter sleeve and there is formed in this body an inner conduit communicated with the outlet through the valve device and having one or more inlets intentionally located to be above the level of the liquid in the tank when the support is in the cleaning and maintenance position. Thus, the safety filter sleeve can be extracted by axially sliding it along the support without the risk of the liquid penetrating towards the valve device when the support is in the cleaning and maintenance position.

### Brief Description of the Drawings

The previous and other features and advantages will be more fully understood from the following detailed description of several embodiments with reference to the attached drawings, in which:
Figure 1 is a perspective view of a liquid filtering device according to an embodiment of the present invention, with a group of elements of a safety filtering unit shown in a working position and also separated from the device;
Figure 2 is a cross-section view of the device of Figure 1 with a group of elements of the safety filtering unit shown in the working position by means of solid lines and in a cleaning and maintenance position by means of dotted lines;
Figure 3 is a partially sectioned side view of the device of Figure 1 with a group of elements of the safety filtering unit shown in the cleaning and maintenance position and with a safety filter sleeve separated from the assembly;
Figure 4 is a plan view of the device of Figure 1 with the elements of the safety filtering unit shown in the working position;
Figure 5 is a cross-section view of a liquid filtering device according to another embodiment of the present invention, with a group of elements of the safety filtering unit shown in a working position by means of solid lines and in a cleaning and maintenance position by means of dotted lines; and
Figure 6 is a schematic diagram illustrating the passage of the liquid to be filtered through the series of pre-filtration drums of the pre-filtering unit and of the safety filtering sleeves in the safety filtering unit.

### Detailed Description of Exemplary Embodiments

The attached figures show a liquid filtering device, applicable to a meat product injection machine, comprising a pre-filtering unit 30 with a first pre-filtration drum 1 arranged to rotate about a horizontal rotation axis and provided with a first filtering wall 2 around said horizontal rotation axis, an inlet hopper 3 configured to receive a liquid to be filtered and to force it into said first pre-filtration drum 1 through said first filtering wall 2 in an upper region thereof, and a tub 4 arranged to collect the liquid filtered through the first filtering wall 2, which exits a lower region of the first pre-filtration drum 1, and at least one safety filtering unit 40 with at least one safety filter sleeve 7 submerged in a tank 5 into which the liquid from said tub 4 is poured, and connected to an outlet 6 of said tank 5, and suction means for sucking the liquid contained in the tank 5 through said safety filter sleeve 7 and through said outlet 6, all according to a known structure.

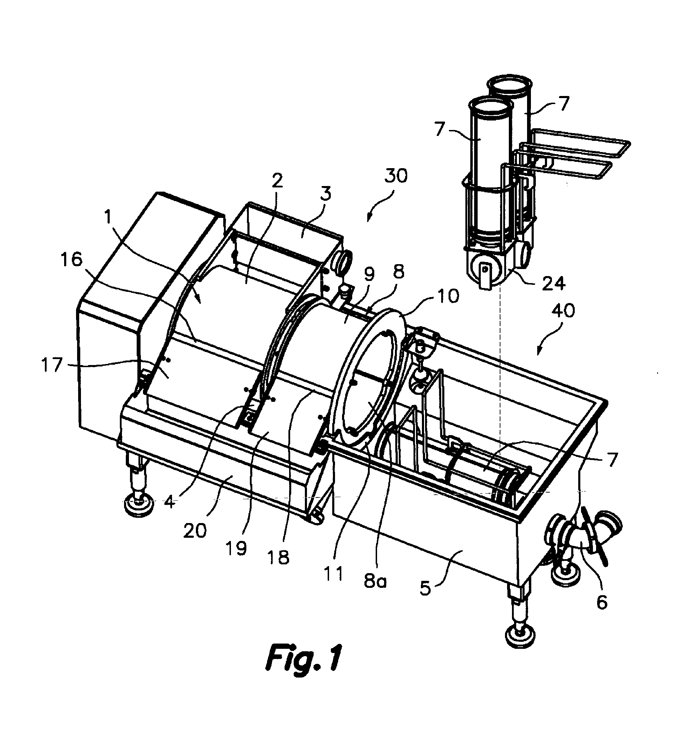

According to this invention the mentioned pre-filtering unit 30 comprises (see Figures 1 to 4) a second pre-filtration drum 8, provided with a second filtering wall 9, arranged to rotate coaxially together with the first pre-filtration drum 1 around the horizontal rotation axis, such that the pre-filtered liquid enters from the tub 4 into said second pre-filtration drum 8 in a lower region thereof, through said second cylindrical filtering wall 9, and is poured from the inside thereof into the tank 5 through an open side wall 8a of the second pre-filtration drum 8.

The first pre-filtration drum 1 has at opposite ends thereof side walls 1a, 1b configured to allow the passage of the pre-filtered liquid from inside the first pre-filtration drum 1 towards the tub 4. The pre-filtered liquid can also exit the first pre-filtration drum 1 through a lower region of its filtering wall 2.

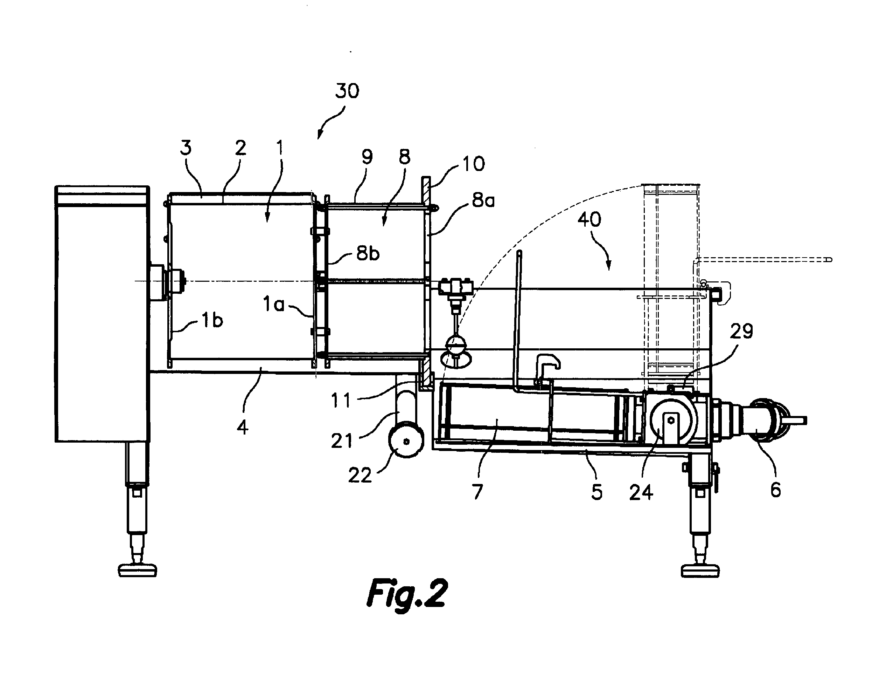

As can be seen, in particular in Figures 1 and 2, the second pre-filtration drum 8 has a closed side wall 8b adjacent to the first pre-filtration drum 1 and between the tub 4 and an end of the second pre-filtration drum 8 adjacent to said open side wall 8a there are arranged dynamic sealing means comprising a perimetric flange 10 extending radially outwards from said end of the second pre-filtration drum 8 adjacent to the open side wall 8a and a circular fraction channel 11 fixed to the tub 4 and inside which said perimetric flange 10 in a partially inserted arrangement rotates.

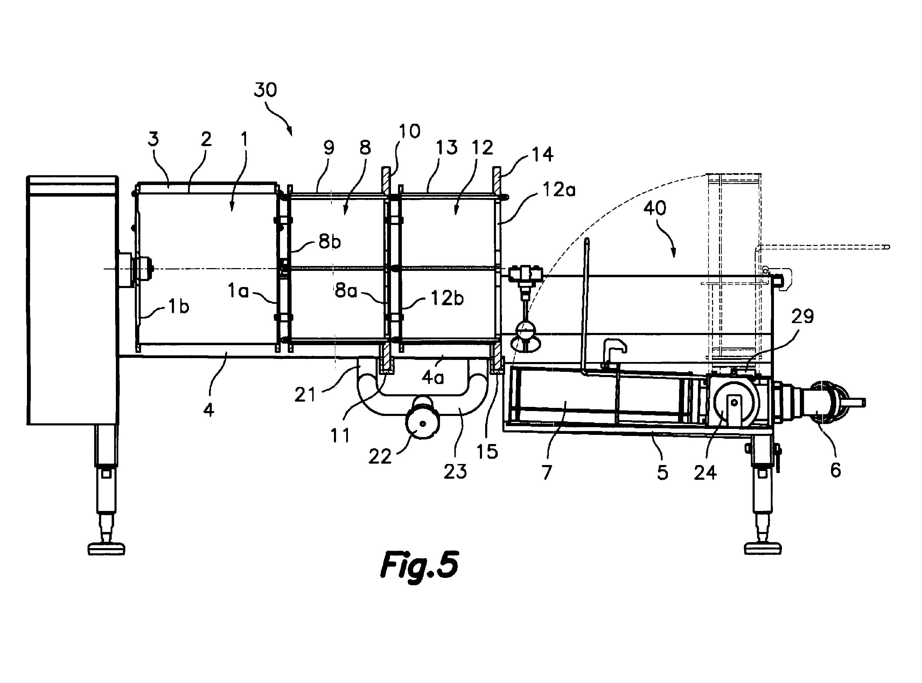

Figure 5 shows an embodiment in which the pre-filtering unit 30 comprises at least one additional pre-filtration drum 12 arranged to rotate coaxially together with the first and second filtration drums 1, 8 and provided with an additional filtering wall 13 around the horizontal rotation axis. It is evident that the structure of adjacent filters could have a larger number of members, according to needs.

The tub 4 arranged to collect the filtered liquid comprises at least one additional compartment 4a separated from the tub 4 by said dynamic sealing means between the tub 4 and the second pre-filtration drum 8, in which said additional compartment 4a of the tub 4 receives the pre-filtered liquid from the second pre-filtration drum 8, and in which the pre-filtered liquid enters from the additional compartment 4a of the tub 4 into said additional pre-filtration drum 12 through the mentioned additional filtering wall 13 in a lower region thereof and is poured from the additional pre-filtration drum 12 into the tank 5 through an open side wall 12a of the additional pre-filtration drum 12.

In turn, the additional pre-filtration drum 12 has a closed side wall 12b adjacent to the second pre-filtration drum 8 and between the additional compartment 4a of the tub 4 and an end of the additional pre-filtration drum 12 adjacent to said open side wall 12a thereof there are arranged dynamic sealing means comprising a perimetric flange 14 extending radially outwards from said end of the additional pre-filtration drum 12 adjacent to the open side wall 12a thereof and a circular fraction channel 15 fixed to the additional compartment 4a of the tub 4 and inside which said perimetric flange 14 is partially inserted and rotates.

The tub 4 has in a lower region a drainage outlet 21 with a drain plug 22 and the additional compartment 4a of the tub 4 has in a lower region a drainage outlet 23 with a drain plug. In Figure 5, the drainage outlets 21, 23 of the tub 4 and of the additional compartment 4a are connected and share a single drain plug 22.

Figure 1 furthermore shows a first scraper 16 arranged to scrape the outer surface of the first filtering wall 2 of the first pre-filtration drum 1 and a ramp 17 arranged to direct the waste pulled off by said first scraper 16 to a collection tray 20. Said Figure 1 also shows a second scraper 18 arranged to scrape the outer surface of the second filtering wall 9 of the second pre-filtration drum 8 and a ramp 19 is arranged to direct the waste pulled off by said second scraper 18 to a collection tray 20.

In the event that the unit (see Figure 5) includes an additional pre-filtration drum 12, an additional scraper is arranged to scrape the outer surface of the additional filtering wall 13 of the additional pre-filtration drum 12 and a ramp is arranged to direct the waste pulled off by said additional scraper to a collection tray 20, said additional elements not being shown in Figure 5.

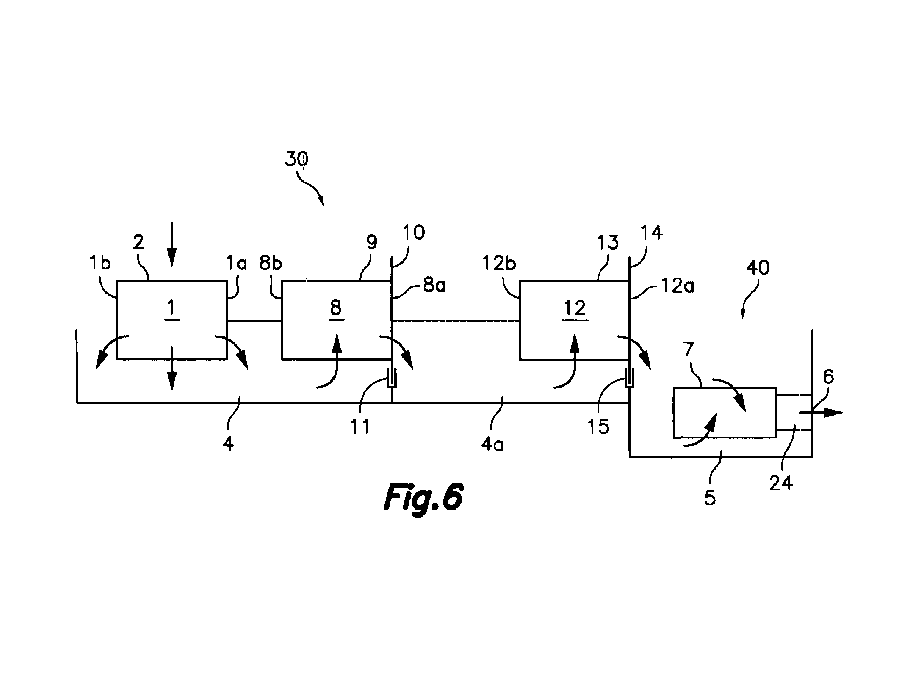

Figure 6 schematically shows, by means of arrows, the passage of the liquid to be filtered through the filtering walls 2, 9, 13 of the successive pre-filtration drums 1, 8, 12 in the pre-filtering unit 30 and through the safety filtering sleeves 7 of the safety filtering unit 40 of the filtration device of the present invention. A person skilled in the art will understand that an indefinite number of additional filtration drums can be added after the second pre-filtration drum 8 using an arrangement similar to that described above for the additional filtration drum 12.

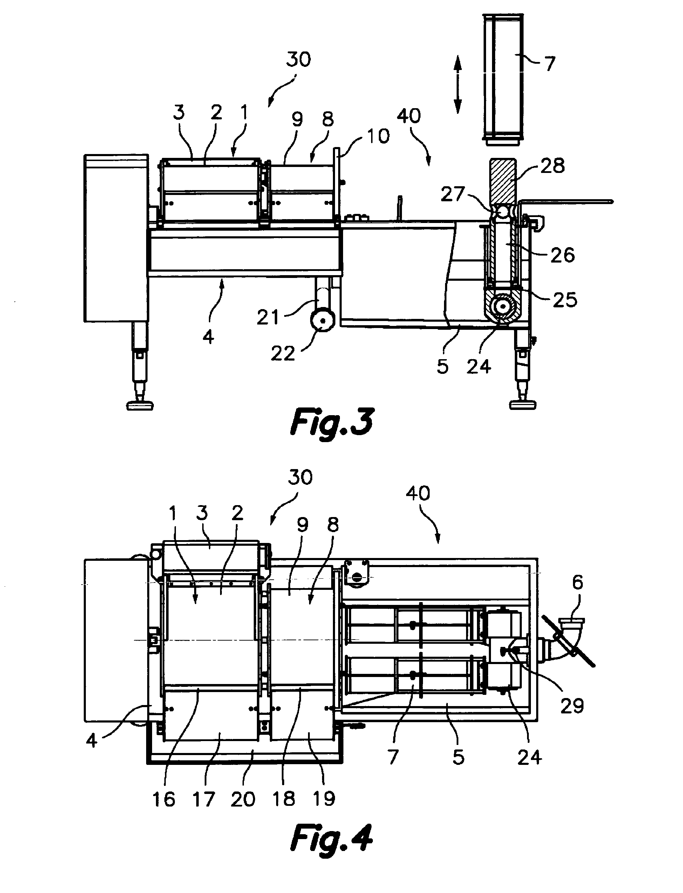

With reference to Figures 1 and 3, according to the invention it is proposed that the safety filtering unit 40 comprises at least two safety filtering sleeves 7 connected to said outlet 6 through respective independent valve devices 24, each of which is operated by a pivoting movement of a support 25 on which the corresponding safety filter sleeve 7 is assembled between a working position, in which the safety filter sleeve 7 is submerged in the liquid in the tank 5 and the corresponding valve device 24 is open, and a cleaning and maintenance position, in which the safety filter sleeve 7 is emerged from the liquid of the tank 5 and the corresponding valve device 24 is closed.

Figure 3 shows that each support 25 is connected to a respective solid body 28 having the purpose of reducing the volume of liquid inside the corresponding safety filter sleeve 7. The mentioned solid body 28 has one or more side inlets 27 which are communicated with an inner conduit 26 extending through the support 25. Thus, when each safety filter sleeve 7 is in the working position, it is communicated with the outlet 6 through the inner conduit 26 of the solid body and of the support 25.

The inlets 27 of the inner conduit 26 are located such that they are above the level of the liquid in the tank 5 when the support 25 is in the cleaning and maintenance position (Figure 3), thus allowing a complete extraction of the safety filter sleeve 7 by axially sliding it along the support 25 without the risk of the liquid penetrating towards the valve device 24 when the support 25 is in the cleaning and maintenance position. The safety filter sleeve 7 is held by an interference coupling or the like to the support 25 next to its area of articulation adjacent to the valve 24.

The valve device 24 has a base body which is retained in the operative situation inside the tank 5 by a slot and a latch 29 (Figures 2, 4 and 6). Thus the complete assembly formed by the valve device 24, the supports 25, the solid bodies 26 and optionally the safety filtering sleeves 7, can be removed from the tank 5 by manually releasing the latch 29 when the safety filtering sleeves 7 in the cleaning and maintenance position, by slightly moving the base body of the valve device 24 towards the pre-filtering unit 30 and vertically lifting the assembly, as shown in Figure 1.

A person skilled in the art will consider modifications and variations from the embodiments shown and described without departing from the scope of the present invention as it is defined in the attached claims.

## Claims

1. A liquid filtering device, applicable to a meat product injection machine, comprising a pre-filtering unit (30) with a first pre-filtration drum (1) arranged to rotate about a horizontal rotation axis and provided with a first filtering wall (2) around said horizontal rotation axis, an inlet hopper (3) configured to receive a liquid to be filtered and to force it into said first pre-filtration drum (1) through said first filtering wall (2) in an upper region thereof, and a tub (4) arranged to collect the liquid filtered through the first filtering wall (2) and which exits a lower region of the first pre-filtration drum (1), and a safety filtering unit (40) with at least one safety filter sleeve (7) submerged in a tank (5) into which the liquid is poured from said tub (4), said safety filter sleeve (7) being connected to an outlet (6) of said tank (5), and suction means for sucking the liquid contained in the tank (5) through said safety filter sleeve (7) and through said outlet (6);
**characterized in that** said pre-filtering unit (30) comprises a second pre-filtration drum (8) arranged to rotate coaxially together with the first pre-filtration drum (1) and provided with a second filtering wall (9) around the horizontal rotation axis, wherein the pre-filtered liquid enters from the tub (4) into said second pre-filtration drum (8) through said second filtering wall (9) in a lower region thereof and is poured from the second pre-filtration drum (8) into tank (5) through an open side wall (8a) of the second pre-filtration drum (8).

2. The device according to claim 1, **characterized in that** the second pre-filtration drum (8) has a closed side wall (8b) adjacent to the first pre-filtration drum (1) and between the tub (4) and an end of the second pre-filtration drum (8) adjacent to said open side wall (8a) there are arranged dynamic sealing means.

3. The device according to claim 2, **characterized in that** said dynamic sealing means comprise a perimetric flange (10) extending radially outwards from said end of the second pre-filtration drum (8) adjacent to the open side wall (8a) and a circular fraction channel (11) fixed to the tub (4) and inside which said perimetric flange (10) is partially inserted and rotates.

4. The device according to claim 1, 2 or 3, **characterized in that** the first pre-filtration drum (1) has at opposite ends thereof side walls (1a, 1b) configured to allow the passage of the pre-filtered liquid from inside the first pre-filtration drum (1) towards the tub (4).

5. The device according to claim 2, **characterized in that** the pre-filtering unit (30) comprises at least one additional pre-filtration drum (12) arranged to rotate coaxially together with the first and second filtration drums (1, 8) and provided with an additional filtering wall (13) around the horizontal rotation axis.

6. The device according to claim 5, **characterized in that** the tub (4) comprises at least one additional compartment (4a) separated from the tub (4) by said dynamic sealing means between the tub (4) and the second pre-filtration drum (8), wherein said additional compartment (4a) of the tub (4) receives the pre-filtered liquid from the second pre-filtration drum (8), and wherein the pre-filtered liquid enters from the additional compartment (4a) of the tub (4) into said additional pre-filtration drum (12) through said additional filtering wall (13) in a lower region thereof and is poured from the additional pre-filtration drum (12) into tank (5) through an open side wall (12a) of the additional pre-filtration drum (12).

7. The device according to claim 6, **characterized in that** the additional pre-filtration drum (12) has a closed side wall (12b) adjacent to the second pre-filtration drum (8) and between the additional compartment (4a) of the tub (4) and an end of the additional pre-filtration drum (12) adjacent to said open side wall (12a) thereof there are arranged dynamic sealing means.

8. The device according to claim 7, **characterized in that** said dynamic sealing means comprise a perimetric flange (14) extending radially outwards from said end of the additional pre-filtration drum (12) adjacent to the open side wall (12a) thereof and a circular fraction channel (15) fixed to the additional compartment (4a) of the tub (4) and inside which said perimetric flange (14) is partially inserted and rotates.

9. The device according to claim 1, **characterized in that** the tub (4) has in a lower region a drainage outlet (21) with a drain plug (22).

10. The device according to claim 6, **characterized in that** the additional compartment (4a) of the tub (4) has in a lower region a drainage outlet (23) with a drain plug.

11. The device according to claim 1, **characterized in that** a first scraper (16) is arranged to scrape the outer surface of the first filtering wall (2) of the first pre-filtration drum (1) and a ramp (17) is arranged to direct the waste pulled off by said first scraper (16) to a collection tray (20).

12. The device according to claim 2, **characterized in that** a second scraper (18) is arranged to scrape the outer surface of the second filtering wall (9) of the second pre-filtration drum (8) and a ramp ( 19) is arranged to direct the waste pulled off by said second scraper (18) to a collection tray (20).

13. The device according to claim 5, **characterized in that** an additional scraper is arranged to scrape the outer surface of the additional filtering wall (13) of the additional pre-filtration drum (12) and a ramp is arranged to direct the waste pulled off by said additional scraper to a collection tray (20).

14. The device according to claim 1, **characterized in that** said safety filtering unit (40) comprises at least two safety filtering sleeves (7) connected to said outlet (6) through respective independent valve devices (24), each of which is operated by a pivoting movement of a support (25) on which the corresponding safety filter sleeve (7) is assembled between a working position, in which the safety filter sleeve (7) is submerged in the liquid in the tank (5) and the corresponding valve device (24) is open, and a cleaning and maintenance position, in which the safety filter sleeve (7) is emerged from the liquid in the tank (5) and the corresponding valve device (24) is closed, each support (25) being connected to a solid body (28) sized to reduce the volume of liquid inside the corresponding safety filter sleeve (7).

15. The device according to claim 14, **characterized in that** each safety filter sleeve (7) is communicated with the outlet (6) through an inner conduit (26) formed in said solid body (28) and in the support (25), said inner conduit (26) having one or more inlets (27) located to be above the level of the liquid in the tank (5) when the support (25) is in the cleaning and maintenance position, allowing an extraction of the safety filter sleeve (7) by axially sliding it along the support (25) without the risk of the liquid penetrating towards the valve device (24) when the support (25) is in the cleaning and maintenance position.

16. The device according to claim 14 or 15, **characterized in that** a base body of the valve device (24) is retained in the operative situation inside the tank (5) by a latch (29) which can be manually released to allow removing the assembly formed by the valve device (24), the supports (25) and the solid bodies (26) of the tank (5).
